(19) Europäisches Patentamt
European Patent Office
Office européen des brevets

(11) **EP 1 529 635 A1**

(12) **EUROPÄISCHE PATENTANMELDUNG**

(43) Veröffentlichungstag:
**11.05.2005 Patentblatt 2005/19**

(51) Int Cl.$^7$: **B32B 27/34**, C08J 5/18

(21) Anmeldenummer: **04025890.7**

(22) Anmeldetag: **02.11.2004**

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(30) Priorität: **10.11.2003 DE 10352430**

(71) Anmelder: **Mitsubishi Polyester Film GmbH**
**65203 Wiesbaden (DE)**

(72) Erfinder:
• **Pfeiffer, Herbert, Prof. Dr.**
**55126 Mainz (DE)**

• **Janssen, Bart, Dr.**
**65189 Wiesbaden (DE)**
• **Hilkert, Gottfried, Dr.**
**55291 Saulheim (DE)**
• **Konrad, Matthias, Dr.**
**65719 Hofheim (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(54) **Peelfähige Polyesterfolie mit verbesserter Sauerstoffbarriere, Verfahren zu ihrer Herstellung und ihre Verwendung**

(57) Coextrudierte, biaxial orientierte Polyesterfolien, welche eine Basisschicht (B) und eine heißsiegelbare und gegenüber APET/CPET und CPET peelfähige Deckschicht (A) aufweisen, wobei
die Deckschicht (A)

| 80 bis 99 Gew.-% | Polyester und |
|---|---|
| 1 bis 10 Gew.-% | anorganische und/oder organische Partikel mit einem mittleren Durchmesser $d_{50}$ von 2,5 bis 12 μm |

enthält und wobei der Polyester zu

| 12 bis 89 Mol-% | aus Einheiten aufgebaut ist, die auf mindestens eine aromatische Dicarbonsäure und zu |
|---|---|
| 11 bis 88 Mol-% | aus Einheiten aufgebaut ist, die auf mindestens eine aliphatische Dicarbonsäure zurückgehen, |

und das Verhältnis aus Teilchengröße $d_{50}$ der Partikel und Schichtdicke $d_A$ der Deckschicht (A) größer/gleich 1 ist, und die Basisschicht (B) Poly(m-xylol-adipinamid) (MXD6) enthält, eignen sich aufgrund ihrer erhöhten Sauerstoffbarriere als Verpackungsmaterial für Nahrungs- und Genussmittel oder als Deckelfolie für APET/CPEToder CPET-Menüschalen.

EP 1 529 635 A1

## Beschreibung

Die Erfindung betrifft eine coextrudierte, peelfähige und biaxial orientierte Polyesterfolie mit einer Basisschicht (B) und mindestens einer auf dieser Basisschicht aufgebrachten Deckschicht (A). Die Basisschicht (B) enthält neben Polyester als zusätzliches Polymer Poly(m-xylol-adipinamid) (MXD6). Die Deckschicht (A) ist heißsiegelbar und besitzt eine leichte bis feste Peelbarkeit, insbesondere zu PET-Menüschalen. Die Deckschicht (A) enthält Polyester auf Basis von aromatischen und aliphatischen Säuren und aliphatischen Diolen. Die Erfindung betrifft weiterhin ein Verfahren zur Herstellung der Folie und ihre Verwendung.

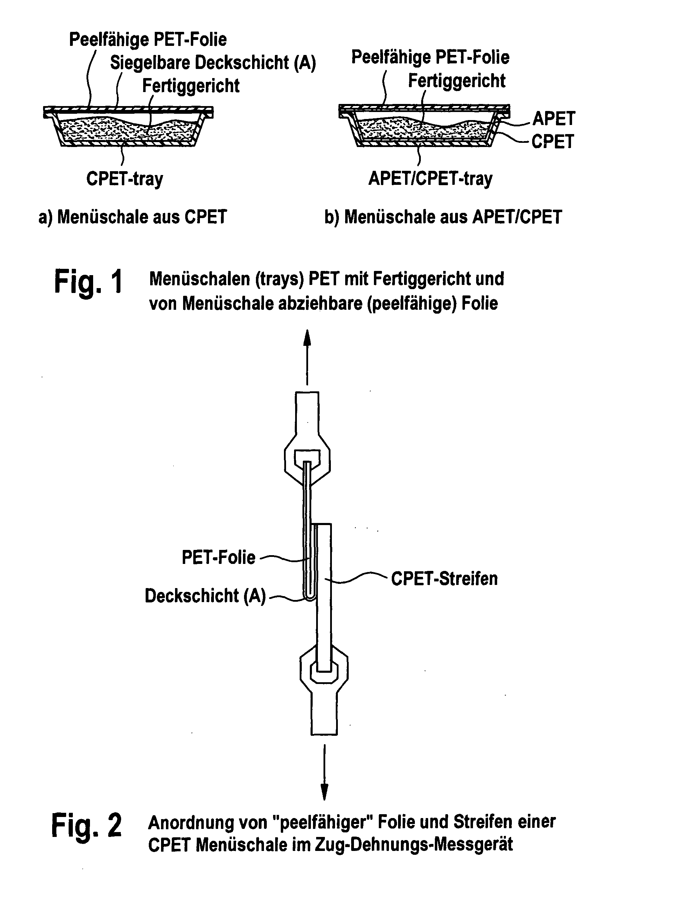

Für Fertiggerichte (engl. ready-prepared meals) sind in Europa die Zuwachsraten derzeit zweistellig. Die Fertiggerichte werden nach ihrer Zubereitung in Menüschalen (engl. trays) eingefüllt (vgl. Figur 1). Auf den Rand der Menüschale wird eine Folie heißgesiegelt, die die Verpackung verschließt und das Fertiggericht gegen äußere Einflüsse schützt. Die Fertiggerichte sind z. B. für die Erhitzung in der Mikrowelle, für die Erhitzung im Backofen oder für die Erhitzung in der Mikrowelle und im Backofen geeignet. Im letztgenannten Fall muss das Fertiggericht und die Verpackung "dual ovenable" (= Mikrowellen- und Backofen fähig) sein. Auf Grund der im Backofen vorherrschenden Temperaturen (bis 220 °C) werden an das Verpackungsmaterial (Menüschale und Deckelfolie) besonders hohe Anforderungen gestellt.

Typische, Mikrowellen- und Backofen fähige Materialien für die Menüschale und die Deckelfolie sind:

Für die Menüschale:

CPET (= kristallines PET) (vgl. Figur 1a), Aluminium, mit PET (= Polyethylenterephthalat) oder mit PET-Folie beschichteter Karton oder Schalen aus APET/CPET (APET = amorphes PET). Menüschalen aus APET/CPET (vgl. Figur 1 b) bestehen außen aus einer CPET-Schicht und innen, d. h. zum Fertigmenü hin, aus einer APET-Schicht. Die dicke, kristalline CPET-Schicht liefert die Stabilität der Schale, auch bei den vergleichsweise hohen Temperaturen im Backofen. Das amorphe PET verbessert im Wesentlichen die Haftung der Folie auf der Menüschale.

Für die Deckelfolie:

Hier wird in der Regel PET verwendet, das selbst bei 220 °C formstabil und fest genug bleibt. Materialien wie PP oder PE scheiden wegen ihrer niedrigen Schmelzpunkte aus. Die Anforderungen an die Deckelfolie werden am besten von biaxial orientierten Polyesterfolien erfüllt.

Bei der Zubereitung des Fertiggerichtes im Ofen wird die Polyesterfolie kurz vor der Erhitzung oder kurz nach der Erhitzung von der Menüschale mit der Hand abgezogen. Hierbei darf die Polyesterfolie auf keinen Fall ein- bzw. ein- und weiter- oder abreißen. Das Abziehen der Folie von der Menüschale, ohne dass dabei die Folie ein-, weiteroder abreißt, wird in der Lebensmittelbranche mit "Peelen" bezeichnet. Für diese Anwendung muss die Polyesterfolie daher nicht nur heißsiegelbar, sondern insbesondere auch peelfähig sein. Bei vorgegebenem Material und vorgegebener Gesamtdicke der Folie wird die Peelfähigkeit der Folie hauptsächlich von den Eigenschaften der Oberflächenschicht der Folie, die auf die Menüschale gesiegelt ist, bestimmt.

Die Peelfähigkeit von Folien lässt sich labormäßig relativ einfach mit einem Spannungs-Dehnungstester (z. B. Fa. Zwick, DE) feststellen (vgl. Figur 2). Für diesen Test werden zunächst aus der Polyesterfolie und der Menüschale zwei 15 mm breite und ca. 50 mm lange Streifen ausgeschnitten und gegeneinander gesiegelt. Die gesiegelten Streifen werden - wie in der Figur 2 dargestellt - in die Kluppen des Testers eingespannt. Der "Winkel" zwischen der in der oberen Kluppe eingespannten Folie und dem Menüschalenstreifen beträgt 180°. Bei diesem Test werden die Kluppen des Testers mit einer Geschwindigkeit von 200 mm/min auseinander gefahren, wobei die Folie im günstigsten Fall von der Menüschale vollständig abgeschält wird (in Anlehnung an ASTM-D 3330).

Bei diesem Test ist im Wesentlichen zwischen zwei unterschiedlichen Mechanismen zu unterscheiden.

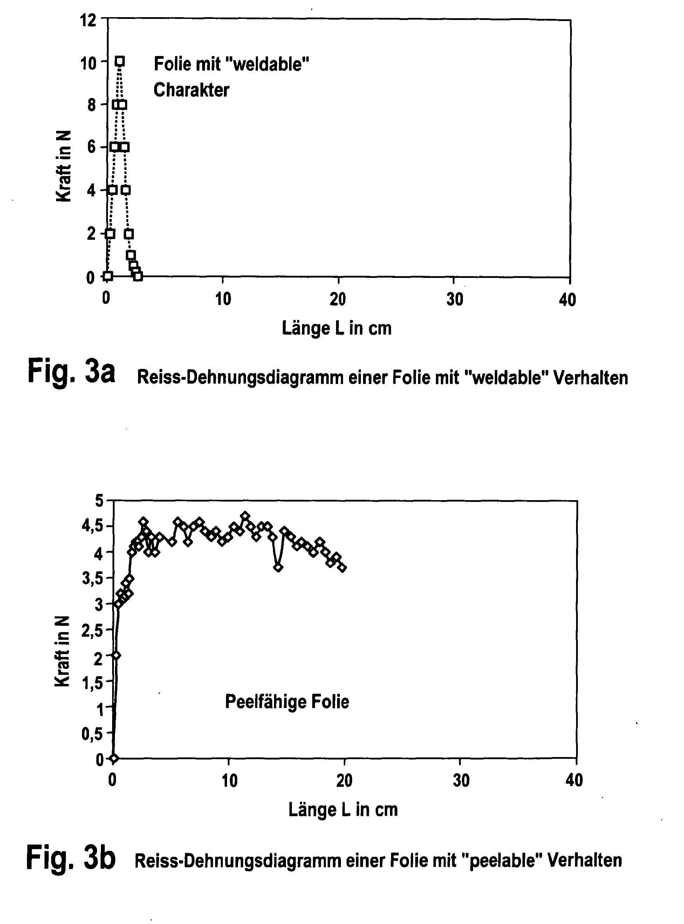

Im ersten Fall steigt beim Ziehvorgang die Zugkraft schnell bis zu einem Maximum an (vgl. Figur 3a) und fällt danach direkt wieder auf Null zurück. Beim Erreichen der Maximalkraft reißt die Folie ein oder vor dem Delaminieren von der Menüschale ab, wodurch die Kraft sofort wieder auf Null zurückgeht. Die Folie ist in diesem Fall nicht peelfähig, da sie zerstört wird. Das Verhalten der Folie lässt sich eher als eine Art "Verschweißen" (engl. weldable) mit der Menüschale beschreiben. Die Zerstörung der Folie beim Abziehen von der Menüschale ist unerwünscht, weil damit das saubere und leichte Öffnen der Verpackung (engl. easy opening) ohne Werkzeuge wie Schere oder Messer erschwert wird.

Eine peelfähige Folie wird dagegen erhalten, wenn die Zug- oder die Schälkraft bis zu einem bestimmten Wert (bzw. bis zu einem bestimmten Plateau) ansteigt und dann über die Strecke, über die die beiden Streifen miteinander gesiegelt sind, in etwa konstant bleibt (vgl. Figur 3b). In diesem Fall reißt die Folie nicht ein, sondern lässt sich wie gewünscht von der Menüschale mit geringem Kraftaufwand abschälen (engl. peelen).

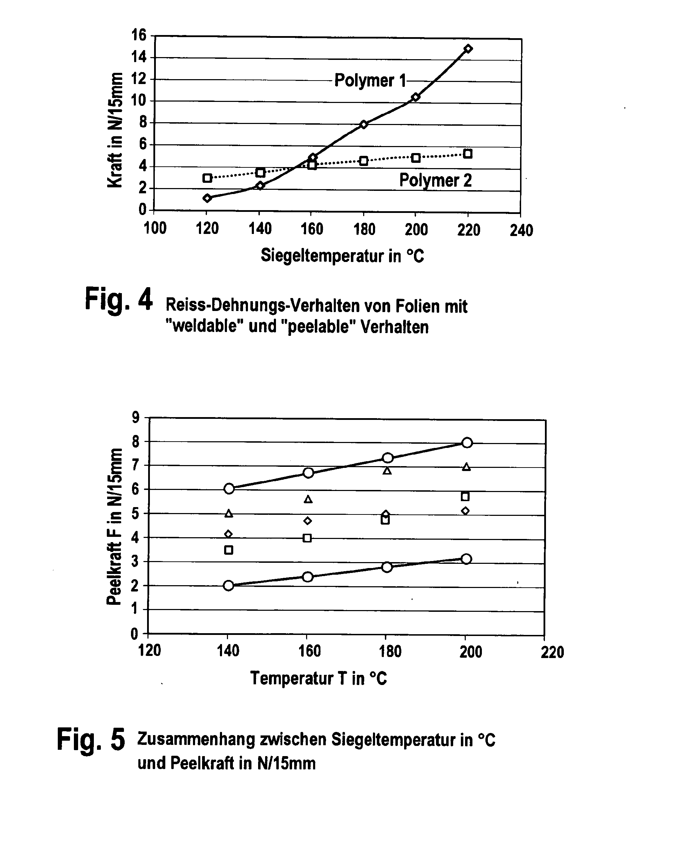

Die Höhe der Peelkraft wird in erster Linie von den in der Deckschicht (A) verwendeten Polymeren bestimmt (vgl. Figur 4, Polymer 1 und Polymer 2). Daneben ist die Höhe der Peelkraft insbesondere abhängig von der angewandten Heißsiegeltemperatur. Die Peelkraft steigt in der Regel mit der Heißsiegeltemperatur an. Mit zunehmender Heißsiegeltemperaturwächst dabei die Gefahr, dass die Siegelschicht ihre Peelfähigkeit verliert. D. h., eine Folie, die bei Anwendung einer geringen Heißsiegeltemperatur peelfähig ist, verliert diese Eigenschaft, wenn eine genügend hohe Heißsiegeltemperatur angewendet wird. Dieses Verhalten ist insbesondere bei Polymeren zu erwarten, die die in Figur 4 für Polymer 1 gezeigte Charakteristik aufzeigen. Diesem tendenziell allgemeingültigen aber für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 4). In der Praxis beträgt dieser Temperaturbereich im Allgemeinen 150 bis 220 °C, bevorzugt 150 bis 200 °C und besonders bevorzugt 150 bis 190 °C.

Die Fertiggerichte werden in der Regel über eine bestimmte Zeitdauer gelagert. In vielen Fällen ist es dabei wünschenswert, das Fertiggericht vor dem Eindringen von Sauerstoff zu schützen. Hierbei ist die Barrierewirkung der über 200 μm dicken Menüschale aus Polyester in der Regel mehr als ausreichend. Schwachstelle in diesem System ist die dünne peelfähige Deckelfolie, die eine um den Faktor 5 bis 20 niedrige Barrierewirkung gegenüber Sauerstoff aufweist. Verbessern lässt sich die Barriereeigenschaft der Folie nach dem Stand der Technik off-line nach der Herstellung der Folie durch die Anwendung eines weiteren Verarbeitungsschrittes. Beispiele hierfür sind die Extrusionsbeschichtung, die Beschichtung oder Laminierung mit Barrierematerialien, die Beschichtung im Vakuum mit Metallen oder mit keramischen Substanzen oder die Plasmapolymerisation in Verbindung mit der Vakuumbeschichtung. Es bestand daher der Wunsch, die verbesserte Barrierewirkung bereits bei der Herstellung der Folie bereitzustellen, ohne dass es hierfür eines zeit- und kostenaufwendigen zusätzlichen Arbeitsschritts bedarf.

Die heißsiegelbare und peelfähige Schicht wird nach dem Stand der Technik in der Regel mittels sogenannter off-line Methoden (d. h. in einem zusätzlichen, der Folienherstellung nachgeordneten Prozessschritt) auf die Polyesterfolie aufgebracht. Bei dieser Methode wird zunächst eine "Standardpolyesterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie appliziert. In einem nachgeschalteten Trockenofen wird das Lösungsmittel verdunstet und das peelfähige Polymer bleibt als feste Schicht auf der Folie zurück.

Solch ein off-line Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte peelfähige, heißsiegelbare Polyesterfolien angeboten. Die Polyesterfolien unterscheiden sich im Aufbau und in der Zusammensetzung der Deckschicht (A). Sie gelangen entsprechend ihrer (Peel)-Eigenschaften in unterschiedliche Anwendungen. Es ist z. B. üblich, die Folien von Seiten der Anwendung in Folien mit leichter Peelbarkeit (easy peel), mit fester Peelbarkeit (medium peel) und mit starker, widerstandsfähiger Peelbarkeit (strong peel) zu unterteilen. Wesentliches quantifizierbares Unterscheidungsmerkmal zwischen diesen Folien ist die Höhe der jeweiligen Peelkraft entsprechend der Figur 3b. Eine Einteilung wird an dieser Stelle wie folgt vorgenommen:

| | |
|---|---|
| Leichte Peelbarkeit (easy peel) | Peelkraft im Bereich von ungefähr 1 bis 4 N je 15 mm Streifenbreite |
| Feste Peelbarkeit (medium peel) | Peelkraft im Bereich von ungefähr 3 bis 8 N je 15 mm Streifenbreite |
| | |
| Starke, widerstandsfähige Peelbarkeit (strong peel) | Peelkraft im Bereich von mehr als 5 je 15 mm Streifenbreite |

Siegelbare PET-Folien sind bekannt.

In der EP-A-0 035 835 wird eine coextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Das Polymer der Versiegelungsfolienschicht ist im Wesentlichen ein Polyestercopolymer, das auf Basis von aromatischen Dicarbonsäuren sowie aliphatischen Diolen aufgebaut ist. Durch die teilchenförmigen Zusatzstoffe werden Oberflächenvorsprünge gebildet, die ein unerwünschtes Blocken und Kleben der Folie an Walzen oder Führungen verhindern. Durch Wahl von Partikeln mit größerem Durchmesser als die Siegelschicht wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (entsprechend 0,97 bis 1,8 N/15 mm Folienbreite). Über das Peelverhalten der Folie gegen Menüschalen aus CPET bzw. APET/CPET finden sich in der Schrift keine Hinweise.

In der EP-A-0 379 190 wird eine coextrudierte, biaxial orientierte Polyesterfolie beschrieben, die eine Trägerfolienschicht aus Polyester und mindestens eine Versiegelungsfolienschicht aus einer Polyester-Zusammensetzung umfasst. Die Versiegelungsfolienschicht kann aliphatische und aromatische Dicarbonsäuren sowie aliphatische Diole enthalten. Das Polymer für die Versiegelungsfolienschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= Fin-Siegelung), beträgt mehr als 400$g_{force}$ · cm/15 mm (mehr als 4 N · cm/15 mm), wobei die Versiegelungsfolienschicht anorganische und/oder organische feine Teilchen enthalten kann, die im Polyester nicht löslich sind und wobei die feinen Teilchen in einer Menge von 0,1 bis 5 Gew.-% vorhanden sind, bezogen auf das Gesamtgewicht der Versiegelungsfolienschicht. In den Beispielen der EP-A-0 379 190 werden organische Partikel- sofern sie überhaupt eingesetzt werden - in Mengen von maximal 0,3 Gew.-% eingesetzt. Die Folie zeichnet sich zwar durch gute Peeleigenschaften (mit Plateau-Charakter im Peeldiagramm [s.o.]) gegen sich selbst aus (d. h. Versiegelungsfolienschicht gegen Versiegelungsfolienschicht), über das Peelverhalten gegen Menüschalen aus APET/CPET und CPET finden sich dort jedoch keine Hinweise. Insbesondere aber ist die Folie gemäß dieser Erfindung verbesserungswürdig in ihrer Herstell- und ihrer Verarbeitbarkeit (die Rohstoffe neigen zum Kleben).

In der WO-A-96/19333 wird ein Verfahren zur Herstellung peelfähiger Folien beschrieben, bei dem die heißsiegelbare, peelfähige Schicht in-line auf die Polyesterfolie aufgebracht wird. Bei dem Verfahren werden vergleichsweise geringe Mengen von organischen Lösungsmitteln verwendet. Die heißsiegelbare, peelfähige Schicht enthält einen Copolyester, der a) 40 bis 90 Mol-% einer aromatischen Dicarbonsäure, b) 10 bis 60 Mol-% einer aliphatischen Dicarbonsäure, c) 0,1 bis 10 Mol-% einer Dicarbonsäure enthaltend eine freie Säuregruppe oder ein Salz davon, d) 40 bis 90 Mol-% eines Glykols enthaltend 2 bis 12 Kohlenstoffatome, und e) 10 bis 60 Mol-% eines Polyalkyldiols aufweist. Die Beschichtung wird aus einer wässrigen Dispersion oder einer Lösung, die bis zu 10 Gew.-% organisches Lösungsmittel enthält, an die Folie angetragen. Das Verfahren ist hinsichtlich der verwendbaren Polymere und der erzielbaren Schichtdicken für die heißsiegelbare, peelfähige Schicht eingeschränkt. Die maximal erreichbare Schichtdicke wird mit 0,5 µm angegeben. Die maximale Siegelnahtfestigkeit ist gering, sie beträgt 500 bis 600 g/25 mm², bzw. [(500 bis 600)/170] N/15 mm Folienbreite.

In der WO 02/059186 A1 wird ein Verfahren zur Herstellung peelfähiger Folien beschrieben, bei dem die heißsiegelbare, peelfähige Schicht ebenfalls in-line auf die Polyesterfolie aufgebracht wird. Die Folien können weiß oder transparent sein. Zur Herstellung der heißsiegelbaren, peelfähigen Schicht wird in diesem Fall die sogenannte Schmelz-Beschichtung (melt-coating) angewendet, wobei vorzugsweise die längsgestreckte Folie mit dem heißsiegelbaren, peelfähigen Polymer beschichtet wird. Das heißsiegelbare, peelfähige Polymer enthält Polyester auf Basis von aromatischen und aliphatischen Säuren, sowie auf Basis von aliphatischen Diolen. Die in den Beispielen offenbarten Copolymere haben Glasübergangstemperaturen von unter -10 °C; solche Copolyester sind zu weich, weshalb sie sich nicht in üblichen Walzenstreckverfahren orientieren lassen (Kleben an den Walzen). Die Dicke der heißsiegelbaren, peelfähigen Schicht beträgt weniger als 8 µm. In der WO 02/059186 A1 wird die an sich bekannte Schmelz-Beschichtung von der an sich bekannten Extrusions-Beschichtung technisch und über die Viskosität der Schmelze abgegrenzt. Nachteilig an dem Verfahren ist, dass nur vergleichsweise dünnflüssige Polymere (max. 50 Pa · s) mit niedrigem Molekulargewicht verwendet werden können. Daraus resultieren nachteilige Peel-Eigenschaften der Folie. Außerdem ist bei diesem Verfahren die Beschichtungsgeschwindigkeit limitiert, wodurch der Herstellungsprozess unwirtschaftlich wird. Qualitätsmäßig zeigen sich Mängel bei der Optik der Folie, die z. B. als Beschichtungsstreifen sichtbar werden. Auch ist es bei diesem Verfahren schwierig, eine über die Bahnbreite der Folie gleichmäßige Dicke der Siegelschicht zu erhalten, was wiederum zu einer ungleichmäßigen Peelcharakteristik führt.

Aufgabe der vorliegenden Erfindung war es, eine heißsiegelbare und peelfähige, biaxial orientierte Polyesterfolie zur Verfügung zu stellen, die sich durch hervorragende Peeleigenschaften insbesondere gegenüber Menüschalen aus APET/CPET oder CPET auszeichnet. Daneben war es eine weitere Aufgabe der Erfindung, eine peelfähige Polyesterfolie zur Verfügung zu stellen, die sich durch verbesserte Barriereeigenschaften auszeichnet, insbesondere gegenüber dem Durchtritt von Sauerstoff. Sie bzw. ihr Herstellungsverfahren sollte die Nachteile der Folien nach dem Stand der Technik nicht mehr aufweisen und sich insbesondere dadurch auszeichnen, dass

- sie gegenüber dem CPET und der APET-Seite von Menüschalen aus APET/CPET eine leichte bis feste Peelbarkeit (easy peel bis medium peel) zeigt. Die Peelkraft sollte im Bereich von 1,5 bis 8 N je 15 mm, bevorzugt im Bereich von 2,0 bis 8 N je 15 mm und besonders bevorzugt im Bereich von 2,5 bis 8 N je 15 mm Folienstreifenbreite liegen;
- in der heißsiegelbaren und peelfähigen Schicht keine organischen Lösemittelrückstände enthalten sind;
- die heißsiegelbare und peelfähige Schicht gegenüber der CPET Menüschale und der APET-Seite von Menüschalen aus APET/CPET eine Mindestsiegeltemperatur von 165 °C, bevorzugt 160 °C, insbesondere 155 °C aufweist und

wobei die max. Siegeltemperatur im Allgemeinen 220 °C, bevorzugt 200 °C und besonders bevorzugt 190 °C beträgt;

- • bei ihrer Herstellung Verfahren angewendet werden, bei denen von vornherein keine organischen Lösemittel verwendet werden;
- • sich die Folie wirtschaftlich herstellen lässt. Dies bedeutet beispielsweise auch, dass zur Herstellung der Folie in der Industrie übliche Streckverfahren eingesetzt werden können. Weiterhin sollte die Folie bei heute üblichen Maschinengeschwindigkeiten bis zu 500 m/min herstellbar sein;
- • eine gute Haftung (bevorzugt größer als 2 N/15 mm Folienbreite) zwischen den einzelnen Schichten der Folie für deren praktische Anwendung gewährleistet ist;
- • bei der Herstellung der Folie gewährleistet ist, dass das Regenerat in einer Menge von bis zu ca. 60 Gew.-% wieder der Extrusion zugeführt werden kann, ohne dass dabei die physikalischen (die Reißfestigkeit der Folie in beiden Richtungen sollte nicht um mehr als 10 % abnehmen), insbesondere aber die optischen Eigenschaften der Folie nennenswert negativ beeinflusst werden.

Außerdem sollte dafür Sorge getragen werden, dass die Folie auf schnelllaufenden Maschinen verarbeitet werden kann. Andererseits sollten sich gleichzeitig die bekannten, Polyesterfolien auszeichnende Eigenschaften nicht verschlechtern. Hierzu gehören beispielsweise die guten mechanischen (der E-Modul der biaxial gestreckten Folien sollte in beiden Orientierungsrichtungen größer als 3500 N/mm$^2$, bevorzugt größer als 3800 N/mm$^2$ und besonders bevorzugt größer als 4200 N/mm$^2$ sein) und die thermischen Eigenschaften (der Schrumpf der biaxial gestreckten Folien sollte in beiden Orientierungsrichtungen nicht größer als 3 %, bevorzugt nicht größer als 2,8 % und besonders bevorzugt nicht größer als 2,5 % sein), das Wickelverhalten und die Verarbeitbarkeit der Folie, insbesondere bei der Bedruckung, Kaschierung oder bei der Beschichtung der Folie mit metallischen oder keramischen Materialien.

Unter heißsiegelbar wird hier die Eigenschaft einer mehrschichtigen, mindestens eine Basisschicht (B) aufweisenden Polyester-Folie verstanden, die zumindest eine Deckschicht (= heißsiegelbare Deckschicht) aufweist, die mittels Siegelbacken durch Anwendung von Wärme (140 bis 220 °C) und Druck (2 bis 5 bar) in einer bestimmten Zeit (0,2 bis 2 s) mit sich selbst (Fin-Siegelung), bzw. mit einem Substrat aus thermoplastischem Kunststoff (= Lap-Siegelung, hier insbesondere mit CPET oder mit der APET-Seite von APET/CPET-Menüschalen) verbunden werden kann, ohne dass dabei die Trägerschicht (= Basisschicht) selbst plastisch wird. Um dies zu erreichen, besitzt das Polymer der Siegelschicht im Allgemeinen einen deutlich niedrigeren Schmelzpunkt als das Polymer der Basisschicht. Wird als Polymer für die Basisschicht beispielsweise PET mit einem Schmelzpunkt von 254 °C verwendet, so beträgt der Schmelzpunkt der heißsiegelbaren Schicht im Allgemeinen weniger als 230 °C, im vorliegenden Fall bevorzugt weniger als 210 °C und besonders bevorzugt weniger als 190 °C.

Unter peelfähig wird hier die Eigenschaft der erfindungsgemäßen Polyester-Folie verstanden, die zumindest eine Schicht (= heißsiegelbare und peelfähige Deckschicht (A)) aufweist, die nach der Heißsiegelung auf ein Substrat (hier im Wesentlichen CPET oder die APET-Seite einer APET/CPET-Schale) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen des Substrates heißgesiegelten Folie in einem Zug-Dehnungs-Prüfgerät unter einem Schälwinkel von 180° entsprechend Figur 2 wird dann ein Reiß-Dehnverhalten der Folie gemäß Figur 3b erhalten. Bei Beginn des Abschälens der Folie von dem Substrat steigt die dazu erforderliche Kraft gemäß Figur 3b bis zu einem bestimmten Wert (z. B. 4 N/15 mm) an und bleibt dann über den gesamtem Schälweg in etwa konstant, ist allerdings mit mehr oder weniger großen Schwankungen behaftet (ca. ± 20 %).

Gelöst wird die Aufgabe durch die Bereitstellung einer coextrudierten, biaxial orientierten Polyesterfolie, welche eine Basisschicht (B) und eine heißsiegelbare und zumindest gegenüber APET/CPET und CPET peelfähige Deckschicht (A) aufweist, wobei die Deckschicht (A)

a)

80 bis 99 Gew.-%     Polyester und

b)

1 bis 10 Gew.-%     anorganische und/oder organische Partikel mit einem mittleren Durchmesser $d_{50}$ von 2,5 bis 12,0 µm (jeweils bezogen auf die Masse der Deckschicht (A)) enthält, und wobei

c) der Polyester zu

12 bis 89 Mol-% aus Einheiten aufgebaut ist, die auf mindestens eine aromatische Dicarbonsäure und zu
11 bis 88 Mol-% aus Einheiten aufgebaut ist, die auf mindestens eine aliphatische Dicarbonsäure zurückgehen,

wobei die Summe der dicarbonsäureabgeleiteten Molprozente 100 ergibt, und
d) das Verhältnis aus Teilchengröße $d_{50}$ der Partikel und Schichtdicke $d_A$ der Deckschicht (A) ≥ 1 ist, und

wobei die Basisschicht (B) Poly(m-xylol-adipinamid) (MXD6) enthält.

Der Anteil an MXD6 in der Basisschicht (B) beträgt bevorzugt 4 bis 50 Gew.-%, bezogen auf das Gewicht von (B). Die Schichtdicke der Deckschicht A $d_A$ beträgt bevorzugt 0,7 bis 8 µm.

Die o. g. Parameter sind jeweils als bevorzugte Werte zu verstehen.

Das Material der Deckschicht (A) besteht also überwiegend aus einem Polyester und anorganischen und/oder organischen Partikeln. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von bevorzugt 12 bis 89 Mol-%, insbesondere 30 bis 84 Mol-%, besonders bevorzugt 40 bis 82 Mol-%, enthalten. Die auf die aliphatischen Dicarbonsäuren zurückgehenden Einheiten sind in dem Polyester in einer Menge von bevorzugt 11 bis 88 Mol-%, insbesondere 16 bis 70 Mol-%, besonders bevorzugt 18 bis 60 Mol-%, enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Bernsteinsäure, Pimelinsäure, Korksäure, Azelainsäure, Sebazinsäure, Glutarsäure und Adipinsäure. Besonders bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure.

Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

12 bis 89 Mol-%, bevorzugt 25 bis 79 Mol-% und besonders bevorzugt 30 bis 72 Mol-% Terephthalat;
0 bis 25 Mol-%, bevorzugt 5 bis 20 Mol-% und besonders bevorzugt 10 bis 20 Mol-% Isophthalat;
11 bis 88 Mol -%, bevorzugt 16 bis 70 Mol-% und besonders bevorzugt 17 bis 58 Mol-% Azelat;
0 bis 50 Mol-%, bevorzugt 0 bis 40 Mol-% und besonders bevorzugt 0,2 bis 30 Mol-% Sebazat;
0 bis 50 Mol-%, bevorzugt 0 bis 40 Mol-% und besonders bevorzugt 0 bis 30 Mol-% Adipat;

mehr als 30 Mol -%, bevorzugt mehr als 40 Mol-% und besonders bevorzugt mehr als 50 Mol-% Ethylen oder Butylen.

Bis zu 10 Gew.-% des Materials der Deckschicht(A) besteht aus weiteren Additiven, Hilfsmitteln und/oder sonstigen in der Polyesterfolientechnologie üblicherweise verwendeten Zusatzstoffen.

In einer günstigen Ausführungsform enthält darüber hinaus das Material der Deckschicht(A) zu 2 bis 19 Gew.-%, bevorzugt 5 bis 17 Gew.-% und besonders bevorzugt 7 bis 16 Gew.-% ein Polymer, welches mit Polyester unverträglich ist (anti-PET-Polymer).

Es hat sich als zweckmäßig erwiesen, den Hauptpolyester der Deckschicht (A) aus zwei getrennten Polyestern I und II herzustellen, die dem Extruder für diese Schicht als Mischung zugeführt werden.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber APET/CPET und CPET-Menüschalen von nicht mehr als 165 °C, bevorzugt nicht mehr als 160 °C und besonders bevorzugt nicht mehr als 155 °C und eine Peelkraft gegenüber APET/CPET und CPET Menüschalen von mindestens 1,5 N, bevorzugt mindestens 2 N, besonders bevorzugt mindestens 2,5 N (immer bezogen auf 15 mm Folienbreite). Die heißsiegelbare und peelfähige Deckschicht (A) hat gegenüber APET/CPET und CPET-Menüschalen eine max. Siegeltemperatur von im Allgemeinen 220 °C, bevorzugt 200 °C und besonders bevorzugt 190 °C, wobei im gesamten Siegelbereich eine gegenüber APET/CPET und CPET-Menüschalen peelfähige Folie erhalten wird. D. h., mit dieser Folie wird beim 180°-Zugversuch gemäß Figur 2 eine Kurve gemäß Figur 3b erhalten. Der Begriff Menüschalen ist gleichzusetzen mit Materialien allgemein.

Für die bevorzugten, oben angegebenen Bereiche lassen sich die Peelergebnisse auch zahlenmäßig beschreiben. Entsprechend den vorliegenden experimentellen Untersuchungen können die Peelergebnisse einfach durch folgenden Zusammenhang zwischen der Siegeltemperatur (T = δ in °C) und der Peelkraft (in N/15 mm) miteinander korreliert werden

$$0{,}02 \cdot \vartheta/°C - 0{,}8 \leq Peelkraft\, F/N\, je\, 15mm \leq 0{,}033 \cdot \vartheta/°C + 1{,}4$$

Dieser Zusammenhang ist graphisch zur Veranschaulichung in Figur 5 dargestellt.

Erfindungsgemäß zeichnet sich die Folie darüber hinaus durch eine sehr gute Barriere, insbesondere gegenüber Sauerstoff aus. Die Folie besitzt eine Sauerstoffbarriere (bezogen auf eine 12 µm dicke Folie) von kleiner als 50 $cm^3 \cdot m^{-2} \cdot d^{-1} \cdot bar^{-1}$, bevorzugt kleiner als 40 $cm^3 \cdot m^{-2} \cdot d^{-1} \cdot bar^{-1}$ und besonders bevorzugt kleiner als 30 $cm^3 \cdot m^{-2} \cdot d^{-1} \cdot bar^{-1}$.

Die Folie nach der vorliegenden Erfindung weist eine Basisschicht (B) und mindestens eine erfindungsgemäße Deckschicht (A) auf. In diesem Fall ist die Folie zweischichtig aufgebaut. In einer bevorzugten Ausführungsform ist die Folie drei - oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C); Folienaufbau A-B-C. Bei einer vierschichtigen Ausführungsform enthält die Folie eine Zwischenschicht (D) zwischen der Basisschicht (B) und der Deckschicht (A) oder (C).

Die Basisschicht der Folie besteht bevorzugt zu mindestens 50 Gew.-% aus thermoplastischem Polyester (= Komponente I), bezogen auf das Gewicht der Basisschicht (B). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homound/oder Copolymeren verwendet werden. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Besonders vorteilhaft ist es, wenn in der Basisschicht (B) ein Polyester-Copolymer auf Basis von Terephthalat und bestimmten Mengen (bevorzugt < 20 Mol-%) Isophthalsäure oder auf Basis von Terephthalat und bestimmten Mengen (bevorzugt < 50 Mol-%) Naphthalin-2,6-dicarbonsäure verwendet wird. In diesem Fall ist die Herstellbarkeit der Folie besonders gut. Die Basisschicht (B) enthält dann im Wesentlichen ein Polyestercopolymeres, das überwiegend aus Terephthalsäure- und Isophthalsäure-Einheiten und/oder Terephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann z. B. nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxide oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die Basisschicht (B) als eine weitere Komponente Poly(mxylol-adipinamid) (MXD6) (= Komponente II) in einer Menge von bevorzugt 4 bis 50 Gew.-%, insbesondere in einer Menge von 5 bis 40 Gew.-% und besonders bevorzugt in einer Menge von 6 bis 30 Gew.-%, bezogen auf das Gewicht der Basisschicht (B). Bei einem Gewichtsanteil des Poly(m-xylol-adipinamid) (MXD6) von kleiner als 4 % in der Basisschicht (B) ist der positive Effekt auf die Sauerstoffbarriere unter Umständen unzureichend. Andererseits wird bei einem Gewichtsanteil des Poly (m-xylol-adipinamid) (MXD6) von größer als 50 % in der Basisschicht (B) zwar die Barriere noch besser, die Herstellbarkeit der Folie und vor allem aber die Regenerierbarkeit der Folie können deutlich schlechter werden.

Poly(m-xylol-adipinamid) (MXD6), auch als Poly-m-Xylylen-adipinamid oder PA-MXD6 bezeichnet, ist ein Polykondensationsprodukt (Polyarylamid) aus m-Xylylendiamin und Adipinsäure und wird in verschiedenen Qualitäten / Typen auf dem Markt angeboten, die grundsätzlich alle für den erfindungsgemäßen Zweck geeignet sind.

Für die Verarbeitung der Polymere hat es sich als günstig erwiesen, wenn das Poly(mxylol-adipinamid) (MXD6) so ausgewählt wird, dass sich die Viskositäten der jeweiligen Polymerschmelzen nicht zu sehr unterscheiden. Im anderen Fall ist mit zusätzlichen Erhebungen/Vorsprüngen, mit Fließstörungen oder mit Streifenbildung auf der fertigen Folie zu rechnen. Außerdem neigen die Polymere dann zur Entmischung. Entsprechend den hier durchgeführten Experimenten sollte die Schmelzviskosität des Poly(m-xyloladipinamid) (MXD6) bevorzugt unterhalb von bestimmten Werten liegen. Sehr gute Resultate im Sinne der vorliegenden Erfindung erhält man, wenn die Schmelzviskostiät für das MXD6 kleiner als 2000 Poise (gemessen in einem Kapillarrheometer von 0,1 mm Durchmesser, einer Länge von 10 mm und bei einer Belastung von 10 kg/cm$^2$, Schmelztemperatur 280 °C), bevorzugt kleiner als 1800 Poise und besonders bevorzugt kleiner als 1600 Poise ist.

Das Poly(m-xylol-adipinamid) (MXD6) wird zweckmäßigerweise entweder als reines Granulat oder als granuliertes Konzentrat (Masterbatch) [Polyester/MXD6 Mischung ] in die Folie eingearbeitet. Das Polyestergranulat wird dazu mit dem Poly(m-xyloladipinamid) (MXD6) bzw. dem Poly(m-xylol-adipinamid) (MXD6)-Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Verfahren zweckmäßig, wenn die Extrusionstemperatur oberhalb der Schmelztemperatur $T_s$ des Poly(m-xylol-adipinamid) (MXD6) liegt, im allgemeinen bevorzugt mindestens 5 °C, vorzugsweise 10 bis 50 °C, insbesondere aber 20 bis 40 °C, über der Schmelztemperatur des Poly(mxylol-adipinamid) (MXD6). Als eine bevorzugte Extrusionseinheit für die Verarbeitung der Mischung, bzw. auch für die Herstellung des Masterbatches aus den Komponenten I und II bietet sich der Zweischneckenextruder an.

Die Folie nach der vorliegenden Erfindung ist zu mindest zweischichtig aufgebaut. Sie besteht dann aus der Basisschicht (B) und der auf dieser durch Coextrusion aufgebrachten erfindungsgemäßen siegelbaren und peelfähigen Deckschicht (A).

Die durch Coextrusion auf die Basisschicht (B) aufgebrachte siegelbare und peelfähige Deckschicht (A) ist überwiegend, d. h. bevorzugt zu mindestens 80 Gew.-% aus Polyestern aufgebaut.

Erfindungsgemäß enthält die heißsiegelbare und peelfähige Deckschicht (A) Polyester auf Basis von aromatischen und aliphatischen Säuren und bevorzugt aliphatischen Diolen. Des Weiteren enthält die Deckschicht (A) anorganische und/oder organische Partikel in einer Konzentration von bevorzugt 1 bis 10 Gew.-%.

Unter den Polyestern werden in der bevorzugten Ausführungsform Copolyester oder Blends aus Homo- und Copolyestern oder Blends aus verschiedenen Copolyestern verstanden, die auf Basis von aromatischen und aliphatischen Dicarbonsäuren und aliphatischen Diolen aufgebaut sind.

Beispiele für die erfindungsgemäß einsetzbaren aromatischen Dicarbonsäuren sind die Terephthalsäure, die Isophthalsäure, die Phthalsäure und die 2,6 Naphthalindicarbonsäure.

Beispiele für die erfindungsgemäß einsetzbaren aliphatischen Dicarbonsäuren sind die Bernsteinsäure, die Glutarsäure, die Adipinsäure, die Pimelinsäure, die Korksäure, die Azelainsäure und die Sebazinsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol.

Der Polyester für die Deckschicht (A) wird bevorzugt aus zwei Polyestern I und II hergestellt.

Der Anteil des Polyesters I, der aus einem oder mehreren aromatischen Dicarboxylaten und einem oder mehreren aliphatischen Alkylenen besteht, in der Deckschicht (A) beträgt bevorzugt 0 bis 50 Gew.-%. In der bevorzugten Ausführungsform beträgt der Anteil des Polyesters I 5 bis 45 Gew.-% und in der besonders bevorzugten Ausführungsform beträgt er 10 bis 40 Gew.-%.

Im Allgemeinen basiert der Polyester I der erfindungsgemäßen Deckschicht (A) auf den folgenden Dicarboxylaten und Alkylenen, jeweils bezogen auf die Gesamtdicarboxylat- bzw. Gesamtalkylenmenge:

70 bis 100 Mol-%, bevorzugt 72 bis 95 Mol-% und besonders bevorzugt 74 bis 93 Mol-% Terephthalat;
0 bis 30 Mol-%, bevorzugt 5 bis 28 Mol-% und besonders bevorzugt 7 bis 26 Mol-% Isophthalat;

mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie bereits zuvor für die Basisschicht (B) aufgelistet worden sind.

Ganz besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D. h. es handelt sich um Polyethylenterephthalat/isophthalat.

In einer weiteren bevorzugten Ausführungsform besteht der Polyester I aus einer Mischung, welche einen Copolyester, aufgebaut aus Terephthalat-, Isophthalat- und aus Ethylen-Einheiten, und ein aromatisches Polyesterhomopolymeres, z. B. ein Polybutylenterephthalat, enthält.

Entsprechend der vorliegenden Erfindung beträgt der Anteil von Polyester II in der Deckschicht (A) bevorzugt 50 bis 100 Gew.-%. In der bevorzugten Ausführungsform beträgt der Anteil von Polyester II 55 bis 95 Gew.-% und in der besonders bevorzugten Ausführungsform beträgt er 60 bis 90 Gew.-%.

Bevorzugt besteht der Polyester II aus einem Copolymeren aus aliphatischen und aromatischen Säurekomponenten, bei welchem die aliphatischen Säurekomponenten bevorzugt 20 bis 90 Mol-%, insbesondere 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, bevorzugt der Terephthalsäure und/oder der Isophthalsäure sowie auf der glykolischen Seite von aliphatischen oder cycloaliphatischen oder aromatischen Diolen, wie sie bereits oben bezüglich der Basisschicht ausführlich beschrieben wurden.

Im Allgemeinen basiert der Polyester II der erfindungsgemäßen Deckschicht (A) bevorzugt zumindest auf den folgenden Dicarboxylaten und Alkylenen, jeweils bezogen auf die Gesamtdicarboxylat- bzw. Gesamtalkylenmenge:

20 bis 90 Mol -%, bevorzugt 30 bis 65 Mol-% und besonders bevorzugt 35 bis 60 Mol-% Azelat;
0 bis 50 Mol-%, bevorzugt 0 bis 45 Mol-% und besonders bevorzugt 0 bis 40 Mol-% Sebazat;
0 bis 50 Mol-%, bevorzugt 0 bis 45 Mol-% und besonders bevorzugt 0 bis 40 Mol-% Adipat;
10 bis 80 Mol-%, bevorzugt 20 bis 70 Mol-% und besonders bevorzugt 30 bis 60 Mol-% Terephthalat;
0 bis 30 Mol-%, bevorzugt 3 bis 25 Mol-% und besonders bevorzugt 5 bis 20 Mol-% Isophthalat;

mehr als 30 Mol-%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie bereits zuvor für die Basisschicht (B) aufgelistet worden sind, oder auch von Hydroxycarbonsäuren wie Hydroxybenzoesäure o. ä.

Durch das Vorhandensein von bevorzugt mindestens 10 Mol-% aromatischer Dicarbonsäure wird gewährleistet, dass das Polymer II ohne Verklebungen z. B. im Coextruder oder in der Längsstreckung verarbeitbar ist.

Bevorzugt enthält die Deckschicht (A) eine Mischung aus den Polyestern I und II. Gegenüber der Verwendung von nur einem Polyester mit vergleichbaren Komponenten und vergleichbaren Anteilen der Komponenten weist eine Mischung die folgenden Vorteile auf:

1. Die Mischung der beiden Polyester I und II ist von den jeweiligen Glasübergangstemperaturen ($T_g$) gesehen leichter zu verarbeiten (zu extrudieren). Wie Untersuchungen gezeigt haben, neigt die Mischung aus einem Polymeren mit einem hohen $T_g$ (Polyester I) und einem Polymeren mit einem niedrigen $T_g$ (Polyester II) weniger zum Verkleben im Einzug des Coextruders als ein einziges Polymer mit einer entsprechend gemischten $T_g$.

2. Die Polymerherstellung ist einfacher, weil man in der Regel nicht beliebig viele Dosierstationen für die Ausgangsstoffe zur Verfügung hat.

3. Außerdem können mit der Mischung praktisch gesehen die gewünschten Peeleigenschaften individueller eingestellt werden als bei Einsatz eines einzigen Polyesters.

4. Auch die Zugabe von Partikeln (siehe unten) gestaltet sich bei Polyester I einfacher als bei Polyester II.

Zweckmäßigerweise beträgt die Glasübergangstemperatur von Polyester I mehr als 50 °C. Bevorzugt beträgt die Glasübergangstemperaturvon Polyester I mehr als 55 °C und besonders bevorzugt mehr als 60 °C. Ist die Glasübergangstemperatur von Polyester I kleiner als 50 °C, kann die Folie unter Umständen nicht verfahrenssicher hergestellt werden. Die Klebeneigung der Deckschicht (A) z. B. gegenüber Walzen kann dabei so groß sein, dass mit häufigen Folienabrissen, insbesondere in der Längsstreckung gerechnet werden muss. Die Folie kann sich dabei um die Walzen in der Längsstreckung wickeln, was zu beträchtlichen Schäden an der Maschine führen kann. Bei der Extrusion verklebt ein solcher Polyester leicht an den metallischen Wänden und führt damit zu Verstopfungen.

Zweckmäßigerweise beträgt die Glasübergangstemperatur von Polyester II weniger als 20 °C. Bevorzugt beträgt die Glasübergangstemperatur weniger als 15 °C und besonders bevorzugt weniger als 10 °C. Ist die Glasübergangstemperatur von Polyester II größer als 20 °C, so neigt die Folie beim Abziehen von der Menüschale vermehrt zum Einreißen oder zum Abreißen, was unerwünscht ist.

In einer weiteren zweckmäßigen Ausgestaltung der Erfindung enthält die heißsiegelbare und peelfähige Deckschicht (A) ein mit Polyester unverträgliches Polymer (anti-PET-Polymer). Der Anteil des polyesterunverträglichen Polymeren (anti-PET-Polymer) beträgt dann bevorzugt 2 bis 19 Gew.-%, bezogen auf die Masse der Deckschicht (A). In einer bevorzugten Ausführungsform beträgt der Anteil des Polymeren 5 bis 17 Gew.-% und in der besonders bevorzugten Ausführungsform beträgt er 7 bis 16 Gew.-%, ebenfalls bezogen auf die Masse der Deckschicht (A).

Beispiele für geeignete unverträgliche Polymere (anti-PET-Polymer) sind Polymere auf Basis von Ethylen (z. B. LLDPE, HDPE), Propylen (PP), Cycloolefinen (CO), Amiden (PA) oder Styrol (PS). In einer bevorzugten Ausführungsform wird als polyesterunverträgliches Polymer (anti-PET-Polymer) ein Copolymeres verwendet. Beispiele hierfür sind Copolymere auf Basis von Ethylen (C2/C3, C2/C3/C4- Copolymere), Propylen (C2/C3, C2/C3/C4- Copolymere), Butylen (C2/C3, C2/C3/C4- Copolymere) oder auf Basis von Cycloolefinen (Norbornen/Ethylen-, Tetracyclododecen/ Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A 1 068 949 oder in der JP 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COC), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die Cycloolefinpolymere weisen im Allgemeinen Glasübergangstemperaturen zwischen -20 und 400 °C auf. Für die Erfindung sind insbesondere solche Cycloolefincopolymerisate (COC) geeignet, die eine Glasübergangstemperatur von kleiner als 160 °C, bevorzugt kleiner als 120 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g. Folien, die ein COC mit einer Glasübergangstemperatur von kleiner als 80 °C enthalten, zeichnen sich gegenüber solchen, die ein COC mit einer Glasübergangstemperatur von größer 80 °C enthalten, durch verbesserte optische Eigenschaften, insbesondere durch eine niedrigere Trübung aus.

Die Herstellung der Cycloolefincopolymere (COC) geschieht z. B. durch eine heterogene oder homogene Katalyse mit metallorganischen Verbindungen und ist in einer Vielzahl von Dokumenten beschrieben. Geeignete Katalysatorsysteme, basierend auf Mischkatalysatoren aus Titan- bzw. Vanadiumverbindungen in Verbindung mit Aluminiumorganylen, werden in der DD 109 224, DD 237 070 und der EP-A-0 156 464 beschrieben.

EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COCs sind käuflich erhältlich; z. B. Topas® (Ticona, Frankfurt).

Beträgt der Anteil des polyesterunverträglichen Polymeren (anti-PET-Polymer) weniger als 2 Gew.-%, bezogen auf die Masse der Deckschicht (A), so ist ein positiver Einfluss des Polymeren auf das Abziehverhalten der Folie von der Menüschale unter Umständen nicht gegeben. Beim Abziehen der Folie von der Menüschale kann diese nach wie vor zum Einreißen oder zum Abreißen neigen. Insbesondere bei höheren Siegeltemperaturen (>160 °C) kommt dieser Effekt durch die Zugabe von polyesterunverträglichem Polymer (anti-PET-Polymer) besonders deutlich zum Tragen. Erfindungsgemäß hergestellte Folien reißen beim Abziehen von der Menüschale auch dann nicht ein oder ab. Andererseits sollte der Anteil von polyesterunverträglichem Polymer (anti-PET-Polymer) 30 Gew.-% nicht überschreiten, da die Trübung der Folie sonst zu hoch wird.

Erfindungsgemäß enthält die heißsiegelbare und peelfähige Deckschicht (A) anorganische und/oder organische Partikel. Entsprechend der vorliegenden Erfindung beträgt der Anteil der Partikel bevorzugt 1 bis 10 Gew.-%, bezogen auf die Masse der Deckschicht (A). In einer bevorzugten Ausführungsform beträgt der Anteil Partikel 1,5 bis 9 Gew.-% und in der besonders bevorzugten Ausführungsform beträgt er 2,0 bis 8 Gew.-%, ebenfalls bezogen auf die Masse der Deckschicht (A).

Enthält die Deckschicht (A) der Folie dagegen Partikel in einer Konzentration von weniger als 1 Gew.-%, so ist ein positiver Einfluss auf das Abziehverhalten der Folie von der Menüschale unter Umständen nicht gegeben, die Folie tendiert andererseits auch zum Ein- oder zum Abreißen. Enthält dagegen die Deckschicht (A) der Folie Partikel in einer Konzentration von mehr als 10 Gew.-%, so wird die Siegelung der Folie zu stark geschwächt.

Es hat sich als vorteilhaft erwiesen, wenn die Partikel in einer bestimmten Größe, in einer bestimmten Konzentration und in einer bestimmten Verteilung vorliegen. Daneben können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Partikel (auch als "Pigmente" oder "Antiblockmittel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Arcrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden. Zur (synthetischen) Herstellung der $SiO_2$-Partikel (auch Silikagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann das Hydrogel getrocknet und weiterverarbeitet werden. Durch Kontrolle des Waschwasser-pH-Wertes und der Trocknungsbedingungen können die wichtigen physikalischen Parameter, wie z. B. Porenvolumen, Porengröße und die Größe der Oberfläche des anfallenden Silikagels variiert werden. Die gewünschte Partikelgröße (z. B. den $d_{50}$-Wert) und die gewünschte Partikelgrößenverteilung (z. B. die SPAN98) erhält man durch geeignete Mahlung des Silikagels (z. B. mechanisch oder hydromechanisch). Solche Partikel können z. B. über die Firmen Grace, Fuji, Degussa oder Ineos bezogen werden.

Die Teilchen haben bevorzugt einen mittleren Partikeldurchmesser $d_{50}$ von 2,5 bis 12,0 µm, insbesondere von 3,0 bis 11,0 µm und besonders bevorzugt von 3,5 bis 10,0 µm. Bei der Verwendung von Teilchen mit einem Durchmesser, der unterhalb 2,5 µm liegt, ist ein positiver Einfluss der Partikel auf die Peeleigenschaften unter Umständen nicht mehr gegeben.

Bevorzugt ist in der heißsiegelbaren und peelfähigen Deckschicht (A) das Verhältnis aus Teilchengröße $d_{50}$ zur Schichtdicke $d_A$ der Deckschicht (A) ≥ 1. Insbesondere ist das Durchmesser/Schichtdicken-Verhältnis mindestens 1,3 und besonders bevorzugt mindestens 1,5. In diesen Fällen ist ein besonders positiver Einfluss der Partikel auf das Abziehverhalten der Folie von der Menüschale gegeben.

Es hat sich als besonders vorteilhaft erwiesen, in der heißsiegelbaren und peelfähigen Deckschicht (A) Partikel zu verwenden, deren Verteilung für den Partikeldurchmesser eine Streuung aufweist, die durch einen SPAN98 von ≤ 2,0 beschrieben wird (Definition des SPAN98, siehe Messvorschrift). Bevorzugt ist ein SPAN98 von ≤ 1,9 und besonders bevorzugt ist ein SPAN98 von ≤ 1,8. Enthält die Deckschicht (A) der Folie dagegen Partikel, deren SPAN98 größer als 2,0 ist, so werden die optischen Eigenschaften und die Siegeleigenschaften der Folie schlechter.

Weiterhin hat es sich für die Eignung der Folie als Peelfolie als vorteilhaft erwiesen, die Rauhigkeit der heißsiegelbaren und peelfähigen Deckschicht (A) so einzustellen, dass ihr $R_a$-Wert bevorzugt größer als 80 nm ist. Bevorzugt ist die Rauhigkeit $R_a$ größer als 100 nm und besonders bevorzugt ist sie größer als 120 nm; die Obergrenze der Rauhigkeit sollte 400 nm, bevorzugt 350 nm, insbesondere 300 nm, nicht überschreiten. Dies kann durch die Auswahl der Partikel /- Durchmesser, deren Konzentration und die Variation der Schichtdicke gesteuert werden.

In einer besonders vorteilhaften dreischichtigen Ausführungsform (ABC) besteht die Folie dann aus der Basisschicht (B), der erfindungsgemäßen Deckschicht (A) und einer der Deckschicht (A) gegenüberliegenden Deckschicht (C). Diese Deckschicht (C) kann aus den für die Basisschicht beschriebenen Polymeren bestehen. Zur Verbesserung der Wickelbarkeit enthält die Deckschicht (C) die, wie bereits für Deckschicht (A) beschrieben, üblichen Partikel (auch als "Antiblockmittel" bezeichnet). Die Partikel der Deckschicht (C) sollten einen mittleren Partikeldurchmesser $d_{50}$ (= Median) von bevorzugt 1,5 bis 6 µm aufweisen. Es hat sich dabei als besonders zweckmäßig erwiesen, Teilchen mit einem mittleren Partikeldurchmesser $d_{50}$ von 2 bis 5 µm und besonders bevorzugt von 2,5 bis 4 µm zu verwenden. Die Partikel der Deckschicht (C) sollten bevorzugt eine Streuung aufweisen, die durch einen SPAN98 von ≤ 2,0 beschrieben wird. Bevorzugt ist der SPAN98 ≤ 1,9 und besonders bevorzugt ist der SPAN98 ≤ 1,8. Die Partikel der Deckschicht (C) sollten in der Regel in einer Konzentration von 0,1 bis 0,5 Gew.-% vorhanden sein. Bevorzugt beträgt die Konzentration der Partikel 0,12 bis 0,4 Gew.-% und besonders bevorzugt 0,15 bis 0,3 Gew.-%.

Die Deckschicht (C) erhöht den Glanz der Folie und verhindert im Fall einer weißen Folie den Abrieb der hochgefüllten weißen Basisschicht (B). Der Glanz der Folienoberfläche (C) bei einer dreischichtigen Folie ist bevorzugt größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seite mehr als 110 und in einer besonders bevorzugten Ausführungsform mehr als 120. Diese Folienoberfläche eignet sich daher insbesondere für eine weitere funktionelle Beschichtung, für die Bedruckung oder für die Metallisierung.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im Allgemeinen größer als 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der zweischichtigen und der besonders vorteilhaften dreischichtigen Ausführungsform der erfindungsgemäßen Folie liegt die Dicke der Deckschicht (A) im Bereich von 0,7 bis 8 µm, bevorzugt im Bereich von 1,0 bis 7,0 µm und besonders bevorzugt im Bereich von 1,3 bis 6,0 µm. Beträgt die Dicke der Deckschicht (A) mehr als 8,0 µm, so wächst die Peelkraft deutlich an und liegt nicht mehr im bevorzugten Bereich. Darüber hinaus wird das Peelverhalten der Folie beeinträchtigt. Beträgt die Dicke der Deckschicht (A) dagegen weniger als 0,7 µm, so hat die Folie in der Regel nicht mehr die gewünschten Peeleigenschaften.

Die Dicke der anderen, nicht siegelbaren Deckschicht (C) kann gleich der Deckschicht (A) sein oder von dieser verschieden; ihre Dicke liegt im Allgemeinen zwischen 0,5 und 5 µm.

Die Gesamtdicke der erfindungsgemäßen Polyesterfolie kann innerhalb weiter Grenzen variieren. Sie beträgt bevorzugt 3 bis 200 µm, insbesondere 4 bis 150 µm, vorzugsweise 5 bis 100 µm, wobei die Basisschicht (B) einen Anteil von vorzugsweise 45 bis 97 % an der Gesamtdicke hat.

Die Basisschicht und die anderen Schichten können zusätzlich übliche Additive, wie z. B. Stabilisatoren (UV, Hydrolyse), flammhemmende Stoffe oder Füller, enthalten. Sie werden zweckmäßig dem Polymer bzw. der Polymermischung bereits vor dem Aufschmelzen zugesetzt.

Gegenstand der vorliegenden Erfindung ist auch ein Verfahren zur Herstellung der Folie. Zur Herstellung der erfindungsgemäßen peelfähigen Deckschicht (A) werden zweckmäßiger Weise die jeweiligen Polymere (Polyester I, Polyester II, ggf. weitere Polymere wie z. B. polyesterunverträgliches Polymer (anti-PET-Polymer), Masterbatch(e) für Partikel) direkt dem Extruder für die Deckschicht (A) zugeführt. Die Materialien lassen sich bei etwa 200 bis 280 °C extrudieren. Aus verfahrenstechnischer Sicht (Durchmischung der verschiedenen Komponenten) hat es sich dabei als besonders günstig erwiesen, wenn die Extrusion der Polymere für die Deckschicht (A) mit einem Zweischneckenextruder mit Entgasungsmöglichkeit durchgeführt wird.

Die Polymere für die Basisschicht (B) (Komponente I = Polyesterhomo- oder Polyestercopolymeres oder Mischungen hiervon, Komponente II = Poly(m-xylol-adipinamid) (MXD6)-Granulat) und für die eventuell vorhandene weitere Deckschicht (C) und gegebenenfalls die Zwischenschicht werden zweckmäßig über weitere Extruder dem (Coextrusions-) System zugeführt. Aus verfahrenstechnischer Sicht (Durchmischung der verschiedenen Polymere) hat es sich dabei als besonders günstig erwiesen, wenn die Extrusion der Polymere für die Basisschicht (B) auf einem Zweischneckenextruder mit Entgasungsmöglichkeit durchgeführt wird. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung der Folie wird im Allgemeinen sequentiell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von ca. 60 bis 130 °C (Aufheiztemperaturen 60 bis 130 °C), und in Querrichtung (transverse direction orientation = TDO) in einem Temperaturbereich von ca. 90 °C (Beginn der Streckung) bis 140 °C (Ende der Streckung) durchgeführt. Das Längsstreckverhältnis liegt im Bereich von bevorzugt 2:1 bis 5,5:1, insbesondere von 2,3:1 bis 5,0:1. Das Querstreckverhältnis liegt bevorzugt im Bereich von 2,4:1 bis 5,0:1, insbesondere von 2,6:1 bis 4,5:1.

Der bevorzugte Temperaturbereich, bei der die biaxiale Streckung durchgeführt wird, beträgt bei der Längsstreckung (MDO) 60 bis 120 °C. Die Aufheiztemperaturen der Folie in der Längsstreckung liegen dabei in einem Bereich von 60 bis 115 °C. Bei der Querstreckung (TDO) liegen die Temperaturen der Folie bevorzugt in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 5,0:1, bevorzugt von 2,3:1 bis 4,8:1. Das Querstreckverhältnis liegt allgemein im Bereich von 2,4:1 bis 5,0:1, bevorzugt von 2,6:1 bis 4,5:1.

Der besonders bevorzugte Temperaturbereich, bei der die biaxiale Streckung durchgeführt wird, beträgt bei der Längsstreckung (MDO) 60 bis 110 °C. Die Aufheiztemperaturen der Folie in der Längsstreckung liegen dabei in einem Bereich von 60 bis 105 °C. Bei der Querstreckung (TDO) liegen die Temperaturen der Folie in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 4,8:1, bevorzugt von 2,3:1 bis 4,6:1. Das Querstreckverhältnis liegt allgemein im Bereich von 2,4:1 bis 5,0:1, bevorzugt von 2,6:1 bis 4,5:1.

Mit den bevorzugten und insbesondere mit den besonders bevorzugten Temperaturen in der MDO wird dem klebrigen Verhalten von Deckschicht (A) auf Walzen (metallische, keramische oder besonders beschichtete Walzenoberflächen) besonders gut Rechnung getragen.

Vor der Querstreckung kann man eine oder beide Oberflächen der Folie nach den an sich bekannten Verfahren In-Line beschichten. Die In-Line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen, wie EVOH, PVOH o.ä. enthalten. Vorzugsweise werden solche Schichten dann auf die nicht siegelbare Oberfläche, z. B. die Oberfläche (C) der Folie aufgetragen.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Verpacken von Nahrungsund Genussmitteln, insbesondere zur Verpackung von Nahrungs- und Genussmitteln in Menüschalen, bei denen peelfähige Polyesterfolien zum Öffnen der Verpackung verwendet werden. Darüber hinaus zeichnet sich die erfindungsgemäße Folie durch hervorragende Barriereeigenschaften, insbesondere gegenüber Sauerstoff aus, wodurch sie insbesondere für Barriereverpackungen (Fleisch, Wurst, Soßen, Pasten, etc.) geeignet ist.

Die nachstehende Tabelle (Tabelle 1) fasst die wichtigsten bevorzugten Folieneigenschaften noch einmal zusammen.

Zur Charakterisierung der Rohstoffe und der Folien wurden im Rahmen der vorliegenden Erfindung die fol-

## Tabelle 1

| Deckschicht (A) bzw. Folie | Erfindungsgemäßer Bereich | Bevorzugt | Besonders bevorzugt | Einheit | Messmethode |
|---|---|---|---|---|---|
| Anteil Einheiten im erfindungsgemäßen Polyester, aufgebaut aus aromatischen Dicarbonsäuren | 12 bis 89 | 30 bis 84 | 40 bis 82 | Mol.-% | |
| Anteil Einheiten im erfindungsgemäßen Polyester, aufgebaut aus aliphatischen Dicarbonsäuren | 11 bis 88 | 16 bis 70 | 18 bis 60 | Mol.-% | |
| Polyester I | 0 bis 50 | 5 bis 45 | 10 bis 40 | Gew.-% | |
| Polyester II | 50 bis 100 | 55 bis 95 | 60 bis 90 | Gew.-% | |
| Partikeldurchmesser $d_{50}$ | 2,5 bis 12 | 3,0 bis 11 | 3,5 bis 10,0 | µm | |
| Füllstoffkonzentration | 1,0 bis 10,0 | 1,5 bis 9,0 | 2,0 bis 8,0 | Gew.-% | |
| Dicke der Deckschicht A | 0,7 bis 8 | 1,0 bis 7,0 | 1,3 bis 6,0 | µm | |
| Partikeldurchmesser/Schichtdicken-Verhältnis | >/= 1,0 | >/= 1,3 | >/= 1,5 | | |
| **Eigenschaften** | | | | | |
| Dicke der Folie | 3 bis 200 | 4 bis 150 | 5 bis 100 | µm | |
| Mindestsiegeltemperatur von DS (A) gegen PET-Menüschalen | 165 | 160 | 155 | °C | |
| Siegelnahtfestigkeit von DS (A) gegen PET-Menüschalen | 1,5 bis 8 | 2,0 bis 8 | 2,5 bis 8 | N/15 mm | |
| Sauerstoffdurchlässigkeit der Folie | 50 | 40 | 30 | $cm^3 \cdot m^{-2} \cdot d^{-1} \cdot bar^{-1}$ | DIN 53380, Teil 3 |
| Glanz der Deckschichten A und C | > 70 und > 100 | > 75 und > 110 | > 80 und > 120 | | DIN 67530 |
| Trübung der Folie | < 20 | < 16 | < 12 | % | ASTM D 1003-52 |

DS: Deckschicht, >/=: größer/gleich

14

genden Messmethoden benutzt.

Messung des mittleren Durchmessers $d_{50}$

Die Bestimmung des mittleren Durchmessers $d_{50}$ wurde mittels Laser auf einem Malvern Master Sizer (Fa. Malvern Instruments Ltd., UK) mittels Laserscannung durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50% Ordinatenwertes mit der Summenkurve liefert auf der Abszissenachse den gewünschten $d_{50}$-Wert (auch Median genannt).

Messung der SPAN98

Die Bestimmung des Streumaßes, der SPAN98, wurde mit dem gleichen Messgerät durchgeführt, wie oben bei der Bestimmung des mittleren Durchmessers $d_{50}$ beschrieben. Der SPAN98 ist dabei wie folgt definiert:

$$SPAN\,98 = \frac{d_{98} - d_{10}}{d_{50}}$$

Der Ermittlung von $d_{98}$ und $d_{10}$ wird wiederum die (relative) Summenkurve der Partikelgrößenverteilung (s. o. "Messung des mittleren Durchmessers $d_{50}$) zu Grunde gelegt. Der Schnittpunkt des 98 %-Ordinatenwertes mit der Summenkurve liefert auf der Abszissenachse sofort den gewünschten $d_{98}$-Wert, und der Schnittpunkt des 10 %-Ordinatenwertes mit der Summenkurve liefert auf der Abszissenachse den gewünschten $d_{10}$-Wert.

SV-Wert

Der SV-Wert des Polymers wurde durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel} -1) \cdot 1000.$$

Glasübergangstemperaturen $T_g$

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

Siegelnahtfestigkeit (Peelkraft)

Zur Bestimmung der Siegelnahtfestigkeit wird ein Folienstreifen (100 mm lang x 15 mm breit) auf einen entsprechenden Streifen der Menüschale gelegt und bei der eingestellten Temperatur von > 140 °C, einer Siegelzeit von 0,5 s und einem Siegeldruck von 4 bar (Siegelgerät HSG/ET der Firma Brugger, DE), beidseitig beheizte Siegelbacke) gesiegelt. Entsprechend Figur 2 werden die gesiegelten Streifen in die Zugprüfmaschine (z. B. Fa. Zwick, DE) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).

Bestimmung der Mindestsiegeltemperatur

Mit dem Siegelgerät HSG/ET der Firma Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 4 bar und einer Siegeldauer von 0,5 s gesiegelt wird. Die 180°- Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 1,0 N/15 mm erreicht wird.

Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

Sauerstoffdurchlässigkeit (OTR = Oxygen Transmission Rate)

Die Messung der Sauerstoffbarriere erfolgte mit einem OXTRAN 100 von Mocon Modern Controls (USA) entsprechend DIN 53 380, Teil 3 (23 °C, 50 % relative Luftfeuchtigkeit auf beiden Seiten der Folie). Die Messung der OTR erfolgte dabei jeweils an 25 µm dicker Folie.

Glanz

Der Glanz der Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Reißfestigkeit

Die Reißfestigkeit der Folie wurde nach DIN 53455 gemessen. Die Prüfgeschwindigkeit ist 1 %/min; 23 °C; 50 % r.F.

E-Modul

Der E-Modul der Folie wurde nach DIN 53457 gemessen. Die Prüfgeschwindigkeit ist 1 %/min; 23 °C; 50 % r.F.

Schrumpf

Der Schrumpf der Folie wurde nach DIN 40634 bestimmt. Die Prüfbedingungen sind 150 °C, 15 min.
Im Folgenden wird die Erfindung anhand von Beispielen näher erläutert.

Beispiel 1

Chips aus Polyethylenterephthalat; bei einer Temperatur von 150 °C auf eine Restfeuchte von unterhalb 100 ppm getrocknet) und Poly(m-xylol-adipinamid) (MXD6, ebenfalls bei einer Temperatur von 150 °C auf eine Restfeuchte von unterhalb 100 ppm getrocknet) wurden in einem Mischungsverhältnis von 85:15 dem Extruder (Einschneckenextruder) für die Basisschicht (B) zugeführt.
Ebenfalls wurden Chips aus Polyethylenterephthalat und Partikel dem Extruder (Zweischneckenextruder mit Entgasung) für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert.
Daneben wurde für die heißsiegelbare und peelfähige Deckschicht (A) eine Mischung bestehend aus Polyester I, Polyester II und SiO$_2$-Partikeln hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die Mischung wurde dem Zweischneckenextruder mit Entgasung für die siegelbare und peelfähige Deckschicht (A) zugeführt. Entsprechend den in untenstehender Tabelle angeführten Verfahrensbedingungen wurden die Rohstoffe in dem Zweischneckenextruder aufgeschmolzen und homogenisiert.
Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung eine dreischichtige Folie mit ABC-Aufbau in einer Gesamtdicke von 25 μm hergestellt. Die Dicke der Deckschicht (A) beträgt 3,0 μm. Die Dicke der Deckschicht (C) beträgt 1,1 μm (vgl. auch Tabelle 2).

Deckschicht (A), Mischung aus:

45,0 Gew.-% Polyester I (= Copolymeres aus 78 Mol-% Ethylenterephthalat, 22 Mol-% Ethylenisophthalat) mit einem SV-Wert von 850. Die Glasübergangstemperatur von Polyester I beträgt ca. 75 °C. Polyester I enthält darüber hinaus 10,0 Gew.-% ®Sylysia 440 (synthetisches $SiO_2$ , Fuji, Japan) mit einem Partikeldurchmesser von $d_{50}$ = 5,5 μm und einem SPAN98 von 1,8. Das Verhältnis von Partikeldurchmesser $d_{50}$ zu Deckschichtdicke $d_{(A)}$ beträgt 1,83:1 (vgl. Tabelle 2).

55 Gew.-% Polyester II (= Copolymeres enthaltend 40 Mol-% Ethylenazelat, 50 Mol-% Ethylentherephthalat, 10 Mol-% Ethylenisophthalat) mit einem SV-Wert von 1000. Die Glasübergangstemperatur von Polyester II beträgt ca. 0 °C.

Basisschicht (B):

85 Gew.-% Polyethylenterephthalat mit einem SV-Wert von 800

15 Gew.-% Poly(m-xylol-adipinamid) (MXD6) der Fa. Mitsubishi Gas Chemical Co., Produktname MXD6 6001 mit einer Schmelzviskosität von 1400 Poise (T = 270 °C, Kapillare ø 1,0 mm, L = 10 mm)

Deckschicht (C), Mischung aus:

85 Gew.-% Polyethylenterephthalat mit einem SV-Wert von 800

15 Gew.-% Masterbatch aus 99 Gew.-% Polyethylenterephthalat (SV-Wert von 800) und 1,0 Gew.-% Sylobloc® 44 H (synthetisches $SiO_2$, Fa. Grace, Worms), $d_{50}$ = 2,5 μm, SPAN98 = 1,9

Die Herstellungsbedingungen in den einzelnen Verfahrensschritten waren:

| Extrusion | Temperaturen | A-Schicht:<br>B-Schicht:<br>C-Schicht: | 230<br>280<br>280 | °C<br>°C<br>°C |
|---|---|---|---|---|
| | Temperatur der Abzugswalze | | 20 | °C |
| Längsstreckung | Aufheiztemperatur | | 70-100 | °C |
| | Strecktemperatur | | 102 | °C |
| | Längsstreckverhältnis | | 3,8 | |
| Querstreckung | Aufheiztemperatur | | 100 | °C |
| | Strecktemperatur | | 130 | °C |
| | Querstreckverhältnis | | 3,5 | |
| Fixierung | Temperatur | | 230 | °C |
| | Dauer | | 3 | s |

In Tabelle 3 sind die Eigenschaften der Folie dargestellt. Laut Messungen (Spalte 2), beträgt die Mindestsiegeltemperatur der Folie gegenüber CPET-Menüschalen 152 °C. Die Folie wurde bei 160, 180 und 200 °C gegen die CPET-Menüschalen gesiegelt (Siegeldruck 4 bar, Siegelzeit 0,5 s). Anschließend wurden Streifen des Verbundes aus erfindungsgemäßer Folie und CPET-Menüschale mittels Spannungs-Dehnungstester entsprechend dervorgenannten Messvorschrift (vgl. Figur2) auseinander gezogen. Für alle Siegeltemperaturen zeigte sich das gewünschte Abschälen der Folien von der Menüschale gemäß Figur 3b. Die gemessenen Siegelnahtfestigkeiten sind in Spalte 3 v. Tab. 3 gelistet. Für alle Siegeltemperaturen wurden peelfähige Folien erhalten. Die Siegelnahtfestigkeiten liegen im unteren Bereich, d. h. dass sich die Folien ohne Kraftanstrengung von der Menüschale abziehen lassen. Darüber hinaus zeichnet sich die Folie durch eine sehr gute Barriere gegen Sauerstoff aus. Es wurde eine Sauerstoffdurchlässigkeit (OTR) der Folie von 8 $cm^3 \cdot m^{-2} \cdot d^{-1} \cdot bar^{-1}$ gefunden. Sie hatte die geforderten guten optischen Eigenschaften, zeigte das gewünschte Handling und das gewünschte Verarbeitungsverhalten.

Beispiel 2

Im Vergleich zu Beispiel 1 wurde die Zusammensetzung der Mischung für die siegelfähige Deckschicht (A) geändert. Die Zusammensetzung der einzelnen Komponenten blieb im Vergleich zu Beispiel 1 unverändert. Die Mischung besteht jetzt aus den folgenden Rohstoffanteilen:

- Polyester I = 40 Gew-%
- Polyester II = 60 Gew-%

Auf Grund des höheren Anteils von Polyester II in der Mischung wurden die Verfahrensparameter in der Längsstreckung modifiziert. Die neuen Bedingungen für die Längstreckung sind in untenstehender Tabelle aufgelistet.

| Längsstreckung | Aufheiztemperatur | | 70-95 | °C |
|---|---|---|---|---|
| | Strecktemperatur | | 97 | °C |
| | Längsstreckverhältnis | | 3,7 | |

Die Mindestsiegeltemperatur der Folie gegenüber CPET-Menüschalen beträgt jetzt 150 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beipiel 1. Sie liegen in einem mittleren Bereich, so dass sich die Folie ohne wesentliche Kraftanstrengung von der Menüschale abziehen lässt. Die Barriereeigenschaften, die optischen Eigenschaften, das Handling und das Verarbeitungsverhalten der Folie waren wie in Beipiel 1.

Beispiel 3

Im Vergleich zu Beispiel 2 wurde die Zusammensetzung der Mischung für die siegelfähige Deckschicht (A) geändert. Die Zusammensetzung der einzelnen Komponenten blieb im Vergleich zu Beispiel 1 unverändert. Die Mischung besteht jetzt aus den folgenden Rohstoffanteilen:

- Polyester I = 30 Gew-%
- Polyester II = 70 Gew-%

Auf Grund des höheren Anteils von Polyester II in der Mischung wurden die Verfahrensparameter in der Längsstreckung modifiziert. Die neuen Bedingungen für die Längstreckung sind in untenstehender Tabelle aufgelistet.

| Längsstreckung | Aufheiztemperatur | | 70-90 | °C |
|---|---|---|---|---|
| | Strecktemperatur | | 93 | °C |
| | Längsstreckverhältnis | | 3,5 | |

Die Mindestsiegeltemperatur der Folie gegenüber CPET-Menüschalen beträgt jetzt 149 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind vergleichbar zu Beipiel 1. Die Barriereeigenschaften, die optischen Eigenschaften, das Handling und das Verarbeitungsverhalten der Folie waren wie in Beipiel 1.

Beispiel 4

Im Vergleich zu Beispiel 3 wurde die Zusammensetzung von Poyester II für die siegelfähige Deckschicht (A) geändert. Die verwendete Mischung in Deckschicht (A) besteht jetzt aus folgenden Rohstoffanteilen:

20 Gew.-% Polyester I, identisch zu Beispiel 1, bis auf die Konzentration für das Antiblockmittel. Polyester I enthält jetzt 20,0 Gew.-% ®Sylysia (synthetisches $SiO_2$ , Fuji, Japan) mit einem Partikeldurchmesser von $d_{50}$ = 5,5 °m und einem SPAN98 von 1,8;

80 Gew.-% Polyester II, ®Vitel1912, (Polyester, Bostik-Findley, USA; enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C.

Die Verfahrensparameter in der Längsstreckung entsprachen denjenigen in Beispiel 3. Die Mindestsiegeltemperatur der erfindungsgemäß hergestellen Folie gegenüber CPET-Menüschalen beträgt jetzt 138 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Sie liegen in einem mittleren Bereich, so dass sich die Folie ohne große Kraftanstrengung von der Menüschale abziehen lässt. Die Barriereeigenschaften, die optischen Eigenschaften, das Handling und das Verarbeitungsverhalten der Folie waren wie in Beipiel 1.

Vergleichsbeispiel 1

Im Vergleich zu Beispiel 1 wurde die Zusammensetzung der siegelfähigen Schicht (A) geändert. In der Basisschicht (B) wurde kein MXD6 verwendet. In der Deckschicht (A) wurde nur der auf Basis von aromatischen Säuren aufgebaute Polyester I verwendet.

Deckschicht (A):

100,0 Gew.-%    Polyester I (= Copolymeres aus 78 Mol-% Ethylenterephthalat und 22 Mol-% Ethylenisophthalat) mit einem SV-Wert von 850. Die Glasübergangstemperatur von Polyester I beträgt ca. 75 °C. Polyester I enthält darüber hinaus 5,0 % ®Sylysia 440 (5,5 μm)

Die Herstellungsbedingungen in den einzelnen Verfahrensschritten wurden in der Längsstreckung der Glasübergangstemperatur des Deckschichtrohstoffes angepasst.

| Längsstreckung | Aufheiztemperatur | | 70-115 | °C |
|---|---|---|---|---|
| | Strecktemperatur | | 120 | °C |
| | Längsstreckverhältnis | | 4,0 | |

In Tabelle 3 sind die Eigenschaften der Folie dargestellt. Obwohl die Folie hochpigmentiert ist und die Pigmente Schwachstellen in der Siegelschicht darstellen, wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 2

Es wurde das Beispiel 5 aus der EP-A 0 035 835 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 3

Es wurde das Beispiel 1 aus der EP-A 0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 4

Es wurde das Beispiel 22 aus der EP-A 0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Die Zusammensetzung der Folien ist in Tabelle 2, die gemessenen Folieneigenschaften sind in Tabelle 3 zusammengefasst.

## Tabelle 2

| | Zusammensetzung Polyester I | | | | Zusammensetzung Polyester II | | | | | | | | Verhältnisse PI/PII | Glastemperaturen PI/PII | Poly(m-xylol-adipin-amid) (MXD6) Anteil in Basisschicht B | Folienaufbau | Foliendicke | Deckschicht-Dicken | | Partikel in (A) | | | Verhältnis $d_{50}/d_{(A)}$ |
|---|---|---|---|---|---|---|---|---|---|---|---|---|---|---|---|---|---|---|---|---|---|---|---|
| | | | | | | | | | | | | | | | | | | (A) | (C) | Durchmesser | SPAN 98 | Konzentration | |
| | TS | IS | EG | NG | AzS | SeS | AdS | TS | IS | EG | BD | WS | | | | | | | | messer | | tration | |
| | Mol-% | | | | Mol-% | | | | | | | | Gew.-% | °C | Gew.-% | | µm | µm | | µm | - | Gew.-% | |
| **Beispiele** 1 | 78 | 22 | 100 | | 40 | | | 50 | 10 | 100 | | | 45/55 | 75/0 | 15 | ABC | 25 | 3 | 1,1 | 5,5 | 1,8 | 4,50 | 1,83 |
| 2 | 78 | 22 | 100 | | 40 | | | 50 | 10 | 100 | | | 40/60 | 75/0 | 15 | ABC | 25 | 3 | 1,1 | 5,5 | 1,8 | 4,00 | 1,83 |
| 3 | 78 | 22 | 100 | | 40 | | | 50 | 10 | 100 | | | 30/70 | 75/0 | 15 | ABC | 25 | 3 | 1,1 | 5,5 | 1,8 | 3,00 | 1,83 |
| 4 | 78 | 22 | 100 | | 40 | 1 | | 45 | 10 | >60 | | 4 | 20/80 | 75/-1 | 15 | ABC | 25 | 3 | 1,1 | 5,5 | 1,8 | 4,00 | 1,83 |
| **V-Beispiele** 1 | 78 | 22 | 100 | | - | - | - | - | - | - | - | - | 100/0/0/ | 75 | 0 | ABC | 25 | 3 | 1,1 | 5,5 | 1,8 | 5 | 1,83 |
| 2 | 82 | 18 | 100 | | - | - | - | - | - | - | - | - | 100/0/0/ | 75 | 0 | AB | 20 | 2,98 | - | 1,5+5 | - | 0,3 | 1,68 |
| 3 | - | - | - | | 10 | | | 90 | | 100 | | | 0/100/0/ | ca. 50 | 0 | AB | 17,2 | 4,1 | - | - | - | - | - |
| 4 | 100 | - | 85 | 15 | - | 32 | 2,4 | 65 | 1,1 | 95,4 | 4,6 | | 50/50/0/ | ca. 20 | 0 | AB | 11,5 | 2,5 | - | 2 | - | 0,25 | 0,8 |

TS Terephthalat, IS Isophthalat, EG Ethylen, BD Butan, NG Neopentyl

AzS Azelat, SeS Sebazat, AdS Adipat, WS weitere Dicarbonsäuren und Glykole

## Tabelle 3

| | | Menü-schale | Mindest-siegel-temperatur °C | Siegelnahtfestigkeit gegenüber Menüschalen 160°C 180°C 200°C N / 15 mm | | | Schältest (= Peelver-halten) | Trübung % | OTR cm³(m² • bar • d) | Rauhigkeit Ra A-Seite C-Seite nm | |
|---|---|---|---|---|---|---|---|---|---|---|---|
| Beispiele | 1 | CPET | 152 | 1,7 | 2,4 | 4,4 | ++++ | 17 | 8 | 225 | 60 |
| | 2 | CPET | 150 | 2,1 | 3,8 | 7,1 | ++++ | 15 | 8 | 220 | 60 |
| | 3 | CPET | 149 | 1,5 | 2,6 | 5,1 | ++++ | 13 | 8 | 210 | 60 |
| | 4 | CPET | 138 | 4,8 | 4,7 | 6,1 | ++++ | 18 | 8 | 222 | 60 |
| V-Beispiele | 1 | CPET | 105 | 3,5 | 5,0 | 8,0 | - | 12 | 55 | 310 | 60 |
| | 2 | CPET | 109 | 4,2 | 5,5 | 8,1 | - | - | 58 | 69 | 25 |
| | 3 | CPET | 112 | 2,0 | 4,0 | 6,0 | - | - | 64 | 33 | 20 |
| | 4 | CPET | 110 | 3,0 | 4,0 | 5,0 | - | - | 64 | 120 | 22 |

++++ Bei allen Siegeltemperaturen wird Folie von der Menüschale "gepeelt", ohne dass dabei die Folie ein- oder weiterreisst. Einwandfreies, sattes, sauberes Peelen der Folie von Menüschale, auch im oberen Temperaturbereich bei hoher Siegelnahtfestigkeit.

- Bei allen Siegeltemperaturen reißt Folie beim Abziehen von der Meüschale ein.

**Patentansprüche**

**1.** Coextrudierte, biaxial orientierte Polyesterfolie, welche eine Basisschicht (B) und eine heißsiegelbare und gegenüber APET/CPET und CPET peelfähige Deckschicht (A) aufweist, wobei die Deckschicht (A)

a)

80 bis 99 Gew.-%     Polyester und

b)

1 bis 10 Gew.-%     anorganische und/oder organische Partikel mit einem mittleren Durchmesser $d_{50}$ von 2,5 bis 12 μm enthält und wobei

c) der Polyester zu

12 bis 89 Mol-%     aus Einheiten aufgebaut ist, die auf mindestens eine aromatische Dicarbonsäure und zu
11 bis 88 Mol-%     aus Einheiten aufgebaut ist, die auf mindestens eine aliphatische Dicarbonsäure zurückgehen,

wobei die Summe der dicarbonsäureabgeleiteten Molprozente 100 ergibt, und
d) das Verhältnis aus Teilchengröße $d_{50}$ der Partikel und Schichtdicke $d_A$ der Deckschicht (A) ≥ 1 ist, und

die Basisschicht (B) Poly(m-xylol-adipinamid) (MXD6) enthält.

**2.** Polyesterfolie nach Anspruch 1, **dadurch gekennzeichnet, dass** die Schichtdicke der Deckschicht (A) $d_A$ 0,7 bis

8 μm beträgt.

3. Polyesterfolie nach Anspruch 1 oder 2, **dadurch gekennzeichnet, dass** die aromatischen Dicarbonsäuren ausgewählt sind aus einer oder mehreren der folgenden Substanzen: Terephthalsäure, Isophthalsäure und 2,6-Naphthalindicarbonsäure.

4. Polyesterfolie nach einem oder mehreren der Ansprüche 1 bis 3, **dadurch gekennzeichnet, dass** die aliphatischen Dicarbonsäuren ausgewählt sind aus einer oder mehreren der folgenden Substanzen: Bernsteinsäure, Pimelinsäure, Korksäure, Azelainsäure, Sebazinsäure, Glutarsäure und Adipinsäure.

5. Polyesterfolie nach einem oder mehreren der Ansprüche 1 bis 4, **dadurch gekennzeichnet, dass** der Polyester der Deckschicht (A) 12 bis 89 Mol-% Terephthalat, 0 bis 25 Mol-% Isophthalat, 11 bis 88 Mol-% Azelat, 0 bis 50 Mol-% Sebazat, 0 bis 50 Mol-% Adipat und mehr als 30 Mol-% Ethylen oder Butylen enthält, jeweils bezogen auf die Gesamtdicarboxylat- bzw. Gesamtalkylenmenge.

6. Polyesterfolie nach einem oder mehreren der Ansprüche 1 bis 5, **dadurch gekennzeichnet, dass** die Deckschicht (A) eine Mindestsiegeltemperatur gegenüber APET/CPET oder CPET Menüschalen von nicht mehr als 165 °C aufweist.

7. Polyesterfolie nach einem oder mehreren der Ansprüche 1 bis 6, **dadurch gekennzeichnet, dass** die Deckschicht (A) eine Siegelnahtfestigkeit gegenüber APET/CPET oder CPET Menüschalen von mindestens 1,5 N/15 mm Folienbreite aufweist.

8. Polyesterfolie nach einem oder mehreren der Ansprüche 1 bis 7, **dadurch gekennzeichnet, dass** der Polyester der Deckschicht (A) aus zwei Polyestern I und II hergestellt wird.

9. Polyesterfolie nach einem oder mehreren der Ansprüche 1 bis 8, **dadurch gekennzeichnet, dass** der Polyester I aus einem oder mehreren aromatischen Dicarboxylaten und einem oder mehreren aliphatischen Alkylenen besteht.

10. Polyesterfolie nach einem oder mehreren der Ansprüche 1 bis 9, **dadurch gekennzeichnet, dass** der Polyester I Terephthalat-, Isophthalat- und Ethyleneinheiten enthält.

11. Polyesterfolie nach einem oder mehreren der Ansprüche 1 bis 10, **dadurch gekennzeichnet, dass** der Anteil des Polyesters I in der Deckschicht (A) 0 bis 50 Gew.-% beträgt.

12. Polyesterfolie nach einem oder mehreren der Ansprüche 1 bis 11, **dadurch gekennzeichnet, dass** der Polyester I eine Glasübergangstemperatur von mehr als 50 °C aufweist.

13. Polyesterfolie nach einem oder mehreren der Ansprüche 1 bis 12, **dadurch gekennzeichnet, dass** der Polyester II aus einem oder mehreren aliphatischen und aus einem oder mehreren aromatischen Dicarboxylaten und aus einem oder mehreren aliphatischen Alkylenen besteht.

14. Polyesterfolie nach einem oder mehreren der Ansprüche 1 bis 13, **dadurch gekennzeichnet**, das der Polyester II Azelat-, Terephthalat-, Isophthalat- und Ethyleneinheiten enthält.

15. Polyesterfolie nach einem oder mehreren der Ansprüche 1 bis 14, **dadurch gekennzeichnet, dass** der Anteil des Polyesters II in der Deckschicht (A) 50 bis 100 Gew.-% beträgt.

16. Polyesterfolie nach einem oder mehreren der Ansprüche 1 bis 15, **dadurch gekennzeichnet, dass** der Polyester II eine Glasübergangstemperatur von weniger als 20 °C aufweist.

17. Polyesterfolie nach einem oder mehreren der Ansprüche 1 bis 16, **dadurch gekennzeichnet, dass** die Folie dreischichtig ist und einen A-B-C-Aufbau aufweist.

18. Polyesterfolie nach einem oder mehreren der Ansprüche 1 bis 17, **dadurch gekennzeichnet, dass** neben der Deckschicht (A) auch die Deckschicht (C) anorganische oder organische Partikel enthält.

**19.** Polyesterfolie nach einem oder mehreren der Ansprüche 1 bis 18, **dadurch gekennzeichnet, dass** die Partikel in der Deckschicht (A) einen SPAN 98 von ≤ 2,0 aufweisen.

**20.** Polyesterfolie nach einem oder mehreren der Ansprüche 1 bis 19, **dadurch gekennzeichnet, dass** die Basisschicht (B) zu mindestens 50 Gew.-% aus thermoplastischem Polyester besteht.

**21.** Polyesterfolie nach einem oder mehreren der Ansprüche 1 bis 20, **dadurch gekennzeichnet, dass** der Polyester der Basisschicht (B) Terephthalat- und/oder Isophthalat- und Ethyleneinheiten enthält.

**22.** Polyesterfolie nach einem oder mehreren der Ansprüche 1 bis 21, **dadurch gekennzeichnet, dass** die Basisschicht (B) 4 bis 50 Gew.-% Poly(m-xylol-adipinamid) (MXD6) enthält.

**23.** Verfahren zur Herstellung einer Polyesterfolie nach einem oder mehreren der Ansprüche 1 bis 22, umfassend die Schritte

a) Herstellen einer mehrschichtigen Folie durch Coextrusion und Ausformen der Schmelzen zu flachen Schmelzefilmen,
b) biaxiales Strecken der Folie und
c) Thermofixieren der gestreckten Folie.

**24.** Verwendung einer Polyesterfolie nach einem oder mehreren der Ansprüche 1 bis 22 als Verpackungsmaterial für Nahrungs- und Genussmittel oder als Deckelfolie für APET/CPET- oder CPET-Menüschalen.

Peelfähige PET-Folie
Siegelbare Deckschicht (A)
Fertiggericht
CPET-tray

a) Menüschale aus CPET

Peelfähige PET-Folie
Fertiggericht
APET
CPET
APET/CPET-tray

b) Menüschale aus APET/CPET

**Fig. 1** Menüschalen (trays) PET mit Fertiggericht und von Menüschale abziehbare (peelfähige) Folie

PET-Folie
Deckschicht (A)
CPET-Streifen

**Fig. 2** Anordnung von "peelfähiger" Folie und Streifen einer CPET Menüschale im Zug-Dehnungs-Messgerät

**Fig. 3a** Reiss-Dehnungsdiagramm einer Folie mit "weldable" Verhalten

**Fig. 3b** Reiss-Dehnungsdiagramm einer Folie mit "peelable" Verhalten

**Fig. 4** Reiss-Dehnungs-Verhalten von Folien mit "weldable" und "peelable" Verhalten

**Fig. 5** Zusammenhang zwischen Siegeltemperatur in °C und Peelkraft in N/15mm

**Europäisches Patentamt**

## EUROPÄISCHER RECHERCHENBERICHT

Nummer der Anmeldung

EP 04 02 5890

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 379 190 A (TOYO BOSEKI) 25. Juli 1990 (1990-07-25) * Ansprüche * ----- | 1-24 | B32B27/34 C08J5/18 |
| Y | DATABASE WPI Section Ch, Week 200123 Derwent Publications Ltd., London, GB; Class A23, AN 2001-220680 XP002313639 & JP 2001 002800 A (UNITIKA LTD) 9. Januar 2001 (2001-01-09) * Zusammenfassung * ----- | 1-24 | |
| P,X | US 2004/146727 A1 (HILKERT GOTTFRIED ET AL) 29. Juli 2004 (2004-07-29) * Anspruch 1 * ----- | 1 | |
| P,X | EP 1 457 317 A (MITSUBISHI POLYESTER FILM GMBH) 15. September 2004 (2004-09-15) * Anspruch 1 * ----- | 1-24 | |
| P,X | EP 1 457 316 A (MITSUBISHI POLYESTER FILM GMBH) 15. September 2004 (2004-09-15) * Anspruch 1 * ----- | 1-24 | RECHERCHIERTE SACHGEBIETE (Int.Cl.7) B32B C08J |

Der vorliegende Recherchenbericht wurde für alle Patentansprüche erstellt

| Recherchenort | Abschlußdatum der Recherche | Prüfer |
|---|---|---|
| Den Haag | 17. Januar 2005 | Hillebrand, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**EP 1 529 635 A1**

**ANHANG ZUM EUROPÄISCHEN RECHERCHENBERICHT**
**ÜBER DIE EUROPÄISCHE PATENTANMELDUNG NR.**                  EP 04 02 5890

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 0379190 | A | 25-07-1990 | JP | 2190333 A | 26-07-1990 |
| | | | JP | 2669026 B2 | 27-10-1997 |
| | | | JP | 2867454 B2 | 08-03-1999 |
| | | | JP | 3081151 A | 05-04-1991 |
| | | | JP | 3010647 B2 | 21-02-2000 |
| | | | JP | 3118152 A | 20-05-1991 |
| | | | JP | 3003144 B2 | 24-01-2000 |
| | | | JP | 3169549 A | 23-07-1991 |
| | | | JP | 2990712 B2 | 13-12-1999 |
| | | | JP | 3175035 A | 30-07-1991 |
| | | | JP | 3003145 B2 | 24-01-2000 |
| | | | JP | 3176146 A | 31-07-1991 |
| | | | DE | 69028025 D1 | 19-09-1996 |
| | | | DE | 69028025 T2 | 20-03-1997 |
| | | | DE | 69033988 D1 | 22-08-2002 |
| | | | DE | 69033988 T2 | 20-03-2003 |
| | | | EP | 0379190 A2 | 25-07-1990 |
| | | | EP | 0712719 A1 | 22-05-1996 |
| | | | KR | 9604763 B1 | 13-04-1996 |
| | | | US | 5458965 A | 17-10-1995 |
| JP 2001002800 | A | 09-01-2001 | KEINE | | |
| US 2004146727 | A1 | 29-07-2004 | DE | 10302036 A1 | 29-07-2004 |
| | | | EP | 1457318 A1 | 15-09-2004 |
| | | | JP | 2004224051 A | 12-08-2004 |
| EP 1457317 | A | 15-09-2004 | DE | 10302035 A1 | 29-07-2004 |
| | | | EP | 1457317 A1 | 15-09-2004 |
| | | | JP | 2004224050 A | 12-08-2004 |
| | | | US | 2004146750 A1 | 29-07-2004 |
| EP 1457316 | A | 15-09-2004 | DE | 10302034 A1 | 29-07-2004 |
| | | | EP | 1457316 A1 | 15-09-2004 |
| | | | JP | 2004224049 A | 12-08-2004 |
| | | | US | 2004146718 A1 | 29-07-2004 |

EPO FORM P0461

Für nähere Einzelheiten zu diesem Anhang : siehe Amtsblatt des Europäischen Patentamts, Nr.12/82

29